# EUROPEAN PATENT APPLICATION

(11) **EP 2 482 443 A1**
(43) Date of publication of application: **01.08.2012**
(21) Application number: 10818836.8
(22) Date of filing: 24.09.2010
(51) Int. Cl.: H02P 9/04, F02D 23/00

(54) **INTERNAL COMBUSTION ENGINE SYSTEM AND SHIP**

(30) Priority: 25.09.2009 JP 2009220628
(71) Applicant: Mitsubishi Heavy Industries, Ltd., Tokyo 108-8215 (JP)
(72) Inventor: SHIRAISHI, Keiichi, Tokyo 108-8215 (JP); OKABE, Masahiko, Tokyo 108-8215 (JP)
(74) Representative: Henkel, Breuer & Partner
(86) International application number: PCT/JP2010/066505
(87) International publication number: WO 2011/037164

(57) **Abstract**

A first generator (34) is rotationally driven by a rotating shaft (33) of a supercharger (3) to generate power. A second generator (4) generates power and drives an output shaft (25). A first converter (5) converts alternating-current power generated by the first generator (34) into direct-current power. A second converter (6) always converts alternating-current power generated by the second generator (4) into direct-current power having the same voltage as the direct-current power obtained by conversion through the first converter (5) , or converts the direct-current power obtained by conversion through the first converter (5) into alternating-current power and supplies the alternating-current power to the second generator (4). An inverter (7) converts the direct-current power obtained by conversion through at least one of the first and second converters (5, 6) into alternating-current power.

## Description

### {Technical Field}

The present invention relates to internal-combustion engine systems and ships, particularly, to an internal-combustion engine system and ship including an internal-combustion engine having a supercharger directly coupled to a generator.

### {Background Art}

In general, there are known superchargers (turbochargers) that supercharge intake air into an internal-combustion engine with energy contained in exhaust from the internal-combustion engine. Also known is a technique in which a generator is directly coupled to a supercharger to generate electricity from the rotation of the supercharger when the internal-combustion engine is operating at high load, thereby effectively recovering energy contained in exhaust gas as electrical energy (generating electricity) and driving a motor directly coupled to an output shaft to assist in driving the output shaft (see, for example, PTL 1).

The technique of generating electricity using a supercharger to which a generator is directly coupled (hereinafter referred to as "hybrid supercharger") is also known for hybrid superchargers mounted in main propulsion engines (for example, diesel engines) of large ships.

For large ships, additionally, a system has been commercialized in which a motor-generator directly coupled to a main propulsion engine is provided to assist in driving an output shaft with surplus power generated inboard and to cover the inboard power demand with electricity generated by the power of the output shaft.
However, there is a problem in that the inboard power demand cannot be covered when the main propulsion engine is operating at low load because the power generated by the hybrid supercharger or shaft motor-generator is decreased. As a solution to this problem, a technique is known in which an internal-combustion engine separate from the main propulsion engine, for example, a generator driven by a diesel engine (hereinafter referred to as "diesel generator"), is provided to make up for the power shortage.

### {Citation List}

### {Patent Literature}

{PTL 1} Japanese Unexamined Patent Application, Publication No. 2006-238700

### {Summary of Invention}

### {Technical Problem}

For the above main propulsion engine having a hybrid supercharger, however, when the main propulsion engine operates at high load, the power that can be generated by the hybrid supercharger may exceed the power required inboard. In this case, surplus power is avoided by controlling the power generated by the hybrid supercharger to a lower level or discarding the generated surplus power by converting it into heat through, for example, a load bank.
That is, there is a problem in that either the energy contained in exhaust gas or electrical energy is wastefully discarded.

On the other hand, if a motor-generator directly coupled to the output shaft of the main propulsion engine is provided, the motor-generator can be driven with surplus power to assist in driving the output shaft, thereby reducing the fuel consumption of the main propulsion engine. The motor-generator can also generate electricity with the power of the output shaft to cover the inboard power demand.
When a motor-generator is used to generate electricity, the rotational driving speed of the motor-generator is not constant because the rotational speed of the output shaft is not constant. Accordingly, the frequency and voltage of the power generated by the motor-generator are not constant, which requires the frequency and voltage of the power supplied or generated to be matched to the inboard frequency and voltage through a frequency changer.

Similarly, the rotational speed of a hybrid supercharger in power generation is not constant, which requires the frequency and voltage of the power supplied or generated to be matched to the inboard frequency and voltage through a frequency changer.

Thus, a ship equipped with a motor-generator directly coupled to the output shaft and a hybrid supercharger mounted in the main propulsion engine requires two frequency changers, which poses a problem in that they increase cost and also make it difficult to ensure more space.

In addition, if the power generated by the hybrid supercharger is supplied to the motor-generator on the output shaft to assist in driving the main propulsion engine, the generated power passes through the two frequency changers, namely, the frequency changer disposed on the hybrid supercharger and the frequency changer disposed on the motor-generator, which poses a problem in that they cause a considerable power loss and therefore wastefully consume the power.

Specifically, the power generated by the hybrid supercharger is rectified into direct current through a converter of the frequency changer disposed on the hybrid supercharger, is converted into power of the same frequency as that of the inboard power through an inverter, is converted into direct current through a converter of the frequency changer disposed on the motor-generator, and is then converted into power of a voltage and frequency suitable for driving the motor-generator through an inverter. That is, the power passes through two converters and two inverters, which poses a problem in that they cause a considerable power loss and therefore wastefully consume power.

On the other hand, when the main propulsion engine operates at low load, as described above, power generation by the diesel generator is needed in addition to power generation by the hybrid supercharger. For example, the diesel engine of the diesel generator needs to be started to operate the hybrid supercharger and the diesel generator in parallel before the power generated by the hybrid supercharger no longer meets the power demand as the load on the main propulsion engine decreases gradually.
Thus, it requires some time after starting the diesel engine to perform power generation with the diesel generator in parallel, which poses a problem in that the diesel engine wastefully consumes fuel during that time.

In addition, a diesel generator generally cannot operate continuously at low load, in other words, cannot operate continuously without a predetermined load (lower-limit load) or higher. Therefore, if a hybrid supercharger and a diesel generator need to be operated in parallel, the lowest possible power generated by the diesel generator needs to be ensured, even if it means reducing the power generated by the hybrid supercharger.
This poses a problem in that the energy-saving effect produced by the introduction of a hybrid supercharger is impaired.

An object of the present invention, which has been made to solve the above problems, is to provide an internal-combustion engine system and ship that can reduce a loss of the energy-saving effect produced by the introduction of a hybrid supercharger.

### {Solution to Problem}

To achieve the above object, the present invention provides the following solutions.
An internal-combustion engine system according to a first aspect of the present invention includes an internal-combustion engine that generates rotational driving force; a supercharger that is supplied with exhaust gas discharged from the internal-combustion engine to supercharge intake air into the internal-combustion engine; an output shaft that is rotationally driven by the internal-combustion engine; a first generator connected to a rotating shaft of the supercharger such that rotational driving force is transferable therebetween to generate power; a second generator connected to the output shaft such that rotational driving force is transferable therebetween to generate power and to drive the output shaft; a first converter that converts alternating-current power generated by the first generator into direct-current power; and a second converter that always converts alternating-current power generated by the second generator into direct-current power having the same voltage as the direct-current power obtained by conversion through the first converter or that converts the direct-current power obtained by conversion through the first converter into alternating-current power and supplies the alternating-current power to the second generator.
In the first aspect of the present invention, preferably, the first and second converters are electrically connected together with electrical wiring.

According to the first aspect of the present invention, power can be generated by the first and second generators. Therefore, the power generated by the second generator can be supplied to the outside when the power generated by the first generator falls short of the external power demand or when the first generator cannot generate power due to failure.
That is, there is no need to use the diesel generator described above. Accordingly, there is no need to ensure sufficient time required for the diesel generator to start, and the fuel supplied to the diesel generator is not needed.

When the power generated by the first generator exceeds the external power demand, part of the power generated by the first generator can be supplied to the second generator through the first and second converters without passing through an inboard power system to assist in rotationally driving the output shaft.
Thus, the internal-combustion engine and the second generator supply the rotational driving force to be transferred by the output shaft, thus alleviating the load on the internal-combustion engine. As a result, the fuel consumption of the internal-combustion engine can be reduced.

In the first aspect of the present invention, preferably, the internal-combustion engine system further includes an inverter that converts the direct-current power obtained by conversion through at least one of the first and second converters into alternating-current power and supplies the alternating-current power to the outside.

With this configuration, a single inverter can be used to convert the direct-current power obtained by conversion through the first and second converters into alternating-current power, thus reducing the cost and installation space of the internal-combustion engine system according to the first aspect of the present invention.
For example, if the voltages of the direct-current power obtained by conversion through the first and second converters are the same, a single inverter can be used where two inverters would otherwise be needed for different voltages. Where the voltages of the direct-current power are said to be the same, it means that they fall within a voltage range that can be covered by a single inverter.

A ship according to a second aspect of the present invention includes the above internal-combustion engine system according to the first aspect of the present invention.
According to the second aspect of the present invention, because the ship includes the above internal-combustion engine system according to the first aspect of the present invention, it can reduce a loss of the energy-saving effect produced by the introduction of a hybrid supercharger.

### {Advantageous Effects of Invention}

The internal-combustion engine system and ship of the present invention provide the advantage of reducing a loss of the energy-saving effect produced by the introduction of a hybrid supercharger because power can be generated by the first generator, which is rotationally driven by the supercharger, and the second generator, which is rotationally driven by the output shaft, and there is therefore no need to add, for example, a diesel generator.
In addition, because power is communicated between the first and second generators through a DC bus, there is no need to use an inverter for converting direct current into alternating current for an inboard power system, thus allowing an efficient power supply.

### {Brief Description of Drawings}

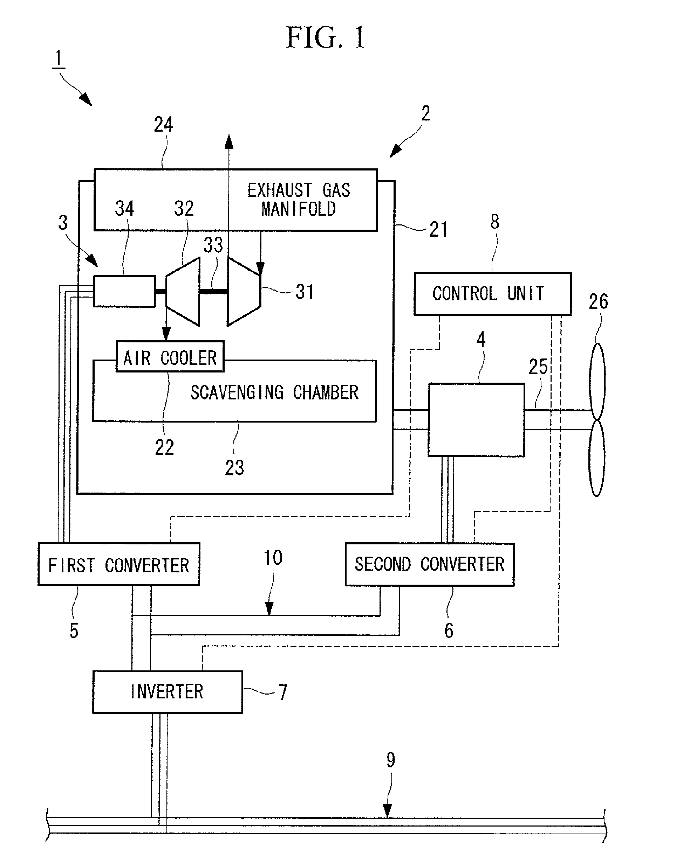

{Fig. 1}
   Fig. 1 is a schematic diagram outlining a diesel engine system according to an embodiment of the present invention.

### {Description of Embodiments}

A diesel engine system according to an embodiment of the invention will now be described with reference to Fig. 1.
Fig. 1 is a schematic diagram outlining the diesel engine system according to this embodiment.
In this embodiment, a diesel engine system (internal-combustion engine system) 1 of the present invention is described by taking an example where it is used for a main propulsion engine of a ship.
As shown in Fig. 1, the diesel engine system 1 mainly includes a diesel engine (internal-combustion engine) 2 having a hybrid supercharger (supercharger) 3 and a shaft motor-generator (second generator) 4, a first converter 5, a second converter 6, an inverter 7, and a control unit 8.

The diesel engine 2 generates propulsion for propelling a ship and supplies power for use in the ship.
The diesel engine 2, as shown in Fig. 1, mainly includes the hybrid supercharger 3, an engine body 21, an air cooler 22, a scavenging chamber 23, an exhaust gas manifold 24, an output shaft 25, and the shaft motor-generator 4.

The hybrid supercharger 3 supercharges intake air into the engine body 21 and, in some situations, supplies power for use in the ship.
The hybrid supercharger 3, as shown in Fig. 1, mainly includes a turbine 31, a compressor 32, a rotating shaft 33, and a supercharger generator (first generator) 34.

The turbine 31 is supplied with high-pressure exhaust gas discharged from the engine body 21 to generate rotational driving force. The turbine 31 is supported on the rotating shaft 33 so as to be rotatable about the axis thereof.

The compressor 32 is rotationally driven to pressurize and supply air taken in from the atmosphere to the engine body 21, in other words, to supercharge intake air into the engine body. The compressor 32 is supported on the rotating shaft 33 so as to be rotatable about the axis thereof.

The rotating shaft 33 supports the turbine 31 and the compressor 32 such that they are rotatable and transfers the rotational driving force generated by the turbine 31 to the compressor 32 and the supercharger generator 34.

The supercharger generator 34 is rotationally driven to generate alternating-current power. The supercharger generator 34 has the rotating shaft 33 connected thereto such that rotational driving force is transferable therebetween. In addition, the supercharger generator 34 has the first converter 5 connected thereto such that the generated alternating-current power can be supplied to the first converter 5.

The engine body 21 is a diesel engine for generating propulsion for propelling the ship. In this embodiment, an application to a two-stroke cycle diesel engine commonly used as a main propulsion engine of a ship is described.
The engine body 21 is configured such that an externally supplied diesel fuel is combusted with supercharged air in a plurality of cylinders to cause pistons to reciprocate, thereby generating rotational driving force.

The engine body 21 is surrounded by the associated devices, such as the hybrid supercharger 3, the air cooler 22, the scavenging chamber 23, and the exhaust gas manifold 24. In addition, the engine body 21 is provided with the output shaft 25, which transfers rotational driving force to a screw propeller 26.

The air cooler 22 cools the intake air supercharged by the hybrid supercharger 3.
The air cooler 22 is connected to a channel to which the intake air supercharged by the compressor 32 of the hybrid supercharger 3 is supplied. In addition, the air cooler 22 is configured such that the supercharged intake air cooled by the air cooler 22 flows into the scavenging chamber 23.

The scavenging chamber 23 is a space through which the supercharged intake air is supplied to the engine body 21.
The scavenging chamber 23 is configured such that the supercharged intake air cooled by the air cooler 22 flows into the scavenging chamber 23. In addition, the scavenging chamber 23 stores the supercharged intake air and supplies the supercharged intake air to the insides of, for example, the cylinders.

The exhaust gas manifold 24 is piping for collectively guiding exhaust gas discharged from the engine body 21 outside the ship.
The exhaust gas manifold 24 is configured such that exhaust gas produced by combustion inside, for example, the cylinders flows into the exhaust gas manifold 24. In addition, the exhaust gas manifold 24 is configured such that part of the exhaust gas is supplied to the turbine 31 of the hybrid supercharger 3.

The output shaft 25 transfers the rotational driving force generated by the engine body 21 to the screw propeller 26.
The output shaft 25 is configured such that rotational driving force is transferable between the output shaft 25 and the shaft motor-generator 4. That is, the output shaft 25 is configured such that rotational driving force is transferable from the output shaft 25 to the shaft motor-generator 4 and such that rotational driving force is transferable from the shaft motor-generator 4 to the output shaft 25.

The screw propeller 26 is rotationally driven to generate propulsion for the ship.

The shaft motor-generator 4 is a motor that is rotationally driven to generate alternating-current power and is also a generator that is externally supplied with alternating-current power to generate rotational driving force. In other words, the shaft motor-generator 4 is reversible between a motor and a generator.
The shaft motor-generator 4 is configured such that rotational driving force is transferable between the shaft motor-generator 4 and the shaft motor-generator 4. In addition, the shaft motor-generator 4 is configured such that it can supply alternating-current power to the second converter 6 and is also configured such that it can be supplied with alternating-current power from the second converter 6.

The first converter 5 converts the alternating-current power generated by the supercharger generator 34 into direct-current power. In addition, the first converter 5 outputs direct-current power having the same voltage as direct-current power obtained by conversion through the second converter 6.
On the other hand, the first converter 5 is configured such that it can be supplied with alternating-current power from the supercharger generator 34. In addition, the first converter 5 is configured such that it can supply direct-current power to at least one of the inverter 7 and the second converter 6 through a DC bus (electrical wiring) 10.

The first converter 5 is configured such that a control signal for controlling the first converter 5 is input from the control unit 8 to the first converter 5.
Where the voltage of the direct-current power obtained by conversion through the first converter 5 and the voltage of the direct-current power obtained by conversion through the second converter 6 are said to be the same, it means that these voltages are identical or fall within a voltage range that can be covered by a single inverter.

The DC bus 10 electrically connects the first converter 5 and the inverter 7 together, the second converter 6 and the inverter 7 together, and the first converter 5 and the second converter 6 together.

The second converter 6 converts the alternating-current power generated by the shaft motor-generator 4 into direct-current power and converts the direct-current power supplied from the first converter 5 into alternating-current power. In addition, the second converter 6 outputs direct-current power of the same voltage as that of the direct-current power obtained by conversion through the first converter 5.

On the other hand, the second converter 6 is configured such that it can be supplied with alternating-current power from the shaft motor-generator 4 and is also configured such that it can be supplied with direct-current power from the first converter 5 through the DC bus 10. In addition, the second converter 6 is configured such that it can supply direct-current power to the inverter 7 through the DC bus 10.
The second converter 6 is configured such that a control signal for controlling the second converter 6 is input from the control unit 8 to the second converter 6.

The inverter 7 converts the direct-current power obtained by conversion through the first converter 5 and the second converter 6 into alternating-current power having a predetermined frequency (for example, 50 or 60 Hz).
The inverter 7 is configured such that it can be supplied with direct-current power from the first converter 5 and the second converter 6 through the DC bus. On the other hand, the inverter 7 is configured such that it can supply alternating-current power to an inboard power system 9.
The inverter 7 is configured such that a control signal for controlling the inverter 7 is input from the control unit 8 to the inverter 7.

The control unit 8 controls the first converter 5, the second converter 6, and the inverter 7. In other words, the control unit 8 controls sharing of power generation between the supercharger generator 34 and the shaft motor-generator 4.
In addition, the control unit 8 controls whether to use the shaft motor-generator 4 as a generator or a motor.

Next, the operation of the diesel engine system 1 having the above configuration will be described.
The operation of the diesel engine system 1 when the load on the engine body 21 is low is described first, followed by a description of the operation of the diesel engine system 1 when the load on the engine body 21 is high.

When the load on the engine body 21 is low, as shown in Fig. 1, the flow rate of the exhaust gas discharged from the engine body 21 to the exhaust gas manifold 24 decreases, and accordingly the flow rate of the exhaust gas supplied from the exhaust gas manifold 24 to the turbine 31 of the hybrid supercharger 3 decreases.

The rotational speed of the rotating shaft 33 of the hybrid supercharger 3 then decreases, and the flow rate of the intake air supercharged by the compressor 32 decreases. On the other hand, the power generated by the supercharger generator 34 decreases to a level lower than the inboard power demand. The shortage relative to the power demand is made up for by the power generated by the shaft motor-generator 4.

As with the temperature of air taken into the compressor 32, the power generated by the supercharger generator 34 disposed in the hybrid supercharger 3 affects the fuel efficiency of the engine body 21. Accordingly, the control unit 8 controls, as needed, the balance (sharing) of power generation between the supercharger generator 34 and the shaft motor-generator 4 taking into account the fuel efficiency of the engine body 21.

Specifically, the control unit 8 outputs to the first converter 5 a control signal for converting the alternating-current power generated by the supercharger generator 34 into direct-current power and outputs to the second converter 6 a control signal for converting the alternating-current power generated by the shaft motor-generator 4 into direct-current power. In addition, the control unit 8 outputs to the inverter 7 a control signal for converting direct-current power into alternating-current power.

Here, the frequency of the alternating-current power generated by the supercharger generator 34 changes in proportion to the rotational speed of the rotating shaft 33 of the hybrid supercharger 3, whereas the frequency of the alternating-current power generated by the shaft motor-generator 4 changes in proportion to the rotational speed of the output shaft 25. To supply the alternating-current power generated by the supercharger generator 34 and the shaft motor-generator 4 to the inboard power system 9, therefore, the alternating-current power is converted into alternating-current power having a predetermined frequency through the first and second converters 5 and 6 and the inverter 7.

Thus, the alternating-current power generated by the supercharger generator 34 is converted into direct-current power through the first converter 5. The alternating-current power generated by the supercharger generator 34, on the other hand, is converted into direct-current power through the second converter 6. The direct-current power thus obtained by conversion is supplied through the DC bus 10 to the inverter 7, which converts the direct-current power into alternating-current power having a predetermined frequency and supplies it to the inboard power system 9.

The above operation is executed not only when the load on the engine body 21 is low, but also when the supercharger generator 34 cannot generate power due to failure.

When the load on the engine body 21 is high, as shown in Fig. 1, the flow rate of the exhaust gas discharged from the engine body 21 to the exhaust gas manifold 24 increases, and accordingly the flow rate of the exhaust gas supplied from the exhaust gas manifold 24 to the turbine 31 of the hybrid supercharger 3 increases.

The rotational speed of the rotating shaft 33 of the hybrid supercharger 3 then increases, and the flow rate of the intake air supercharged by the compressor 32 increases. On the other hand, the power generated by the supercharger generator 34 increases to a level higher than the inboard power demand. Accordingly, the surplus power generated by the supercharger generator 34 is supplied to the shaft motor-generator 4.
The control unit 8 controls, as needed, the power generated by the supercharger generator 34 and the output of the shaft motor-generator 4 so as to minimize the fuel consumption of the engine body 21.

Specifically, the control unit 8 outputs to the first converter 5 a control signal for converting the alternating-current power generated by the supercharger generator 34 into direct-current power and outputs to the inverter 7 a control signal for converting direct-current power into alternating-current power. On the other hand, the control unit 8 outputs to the second converter 6 a control signal for converting direct-current power into alternating-current power. The frequency of the alternating-current power obtained by conversion through the second converter 6 is controlled such that the rotational speed of the shaft motor-generator 4 is suitable for assisting in rotationally driving the output shaft 25.

Thus, the alternating-current power generated by the supercharger generator 34 is converted into direct-current power through the first converter 5. The direct-current power obtained by conversion is supplied through the DC bus 10 to the inverter 7, which converts the direct-current power into alternating-current power having a predetermined frequency and supplies it to the inboard power system 9.

The surplus power generated by the supercharger generator 34, on the other hand, is converted into direct-current power through the first converter 5 and is supplied through the DC bus 10 to the second converter 6. The second converter 6 converts the direct-current power into alternating-current power and supplies it to the shaft motor-generator 4. Upon being supplied with the alternating-current power, the shaft motor-generator 4 rotationally drives the output shaft 25.

Thus, the output shaft 25 is rotationally driven by both the engine body 21 and the shaft motor-generator 4. In other words, the engine body 21 and the shaft motor-generator 4 share the rotational driving force for generating the propulsion required for the ship. This reduces the rotational driving force demanded of the engine body 21 as compared to the case where the engine body 21 generates the rotational driving force alone.

With the above configuration, power can be generated by the supercharger generator 34 and the shaft motor-generator 4. Therefore, the power generated by the shaft motor-generator 4 can be supplied to the ship when the power generated by the supercharger generator 34 falls short of the inboard power demand or when the supercharger generator 34 cannot generate power due to failure.
That is, there is no need to additionally use the diesel generator described above, and there is no need to ensure sufficient time required for the diesel generator to start. In addition, the fuel supplied to the diesel generator is not needed.
As a result, the diesel engine system 1 can reduce a loss of the energy-saving effect produced by the introduction of the hybrid supercharger 3.

When the power generated by the supercharger generator 34 exceeds the inboard power demand, part of the power generated by the supercharger generator 34 can be supplied to the shaft motor-generator 4 through the first converter 5 and the second converter 6 to assist in rotationally driving the output shaft 25.
Thus, the engine body 21 and the shaft motor-generator 4 supply the rotational driving force to be transferred by the output shaft 25, thus alleviating the load on the engine body 21. As a result, the fuel consumption of the engine body 21 can be reduced.

Because the voltages of the direct-current power obtained by conversion through the first converter 5 and the second converter 6 are the same, the single inverter 7 can be used where two inverters would otherwise be needed for different voltages. Accordingly, the cost and installation space of the diesel engine system 1 of this embodiment can be reduced.

### {Reference Signs List}

- 1: diesel engine system (internal-combustion engine system)
- 2: diesel engine (internal-combustion engine)
- 3: hybrid supercharger (supercharger)
- 4: shaft motor-generator (second generator)
- 5: first converter
- 6: second converter
- 7: inverter
- 10: DC bus (electrical wiring)
- 25: output shaft
- 33: rotating shaft
- 34: supercharger generator (first generator)

## Claims

1. An internal-combustion engine system comprising:
an internal-combustion engine that generates rotational driving force;
a supercharger that is supplied with exhaust gas discharged from the internal-combustion engine to supercharge intake air into the internal-combustion engine;
an output shaft that is rotationally driven by the internal-combustion engine;
a first generator connected to a rotating shaft of the supercharger such that rotational driving force is transferable therebetween to generate power;
a second generator connected to the output shaft such that rotational driving force is transferable therebetween to generate power and to drive the output shaft;
a first converter that converts alternating-current power generated by the first generator into direct-current power; and
a second converter that always converts alternating-current power generated by the second generator into direct-current power having the same voltage as the direct-current power obtained by conversion through the first converter or that converts the direct-current power obtained by conversion through the first converter into alternating-current power and supplies the alternating-current power to the second generator.

2. The internal-combustion engine system according to Claim 1, wherein the first and second converters are electrically connected together with electrical wiring.

3. The internal-combustion engine system according to Claim 1 or 2, further comprising an inverter that converts the direct-current power obtained by conversion through at least one of the first and second converters into alternating-current power and supplies the alternating-current power to the outside.

4. A ship comprising the internal-combustion engine system according to one of Claims 1 to 3.
